Europäisches Patentamt

European Patent Office

Office européen des brevets

(19)

(11) Veröffentlichungsnummer: **0 283 649**

**A1**

## EUROPÄISCHE PATENTANMELDUNG

(21) Anmeldenummer: 88100719.9

(22) Anmeldetag: 20.01.88

(51) Int. Cl.4 **B01J 27/16** , B01J 21/16 , C07C 29/04

(30) Priorität: 21.03.87 DE 3709401

(43) Veröffentlichungstag der Anmeldung:
28.09.88 Patentblatt 88/39

(84) Benannte Vertragsstaaten:
BE DE FR GB IT NL

(71) Anmelder: **HÜLS AKTIENGESELLSCHAFT**
**Patentabteilung / PB 15 - Postfach 13 20**
**D-4370 Marl 1(DE)**

(72) Erfinder: **Sommer, August, Dr.**
**Birnenbruchstrasse 10**
**D-4690 Herne 1(DE)**
Erfinder: **Schlüter, Dietrich, Dr.**
**Gaussstrasse 15**
**D-4690 Herne 2(DE)**

(54) Verfahren zur Herstellung eines Katalysators für die Hydratation von Olefinen zu Alkoholen.

(57) Die Hydratation von Olefinen zu Alkoholen erfolgt mittels Phosphorsäure als Katalysator, die auf Katalysator-Trägern aufgebracht ist. Gute Katalysatoren in bezug auf Langzeitfestigkeit und gutem Festhalten der Phosphorsäure haben als Träger ausgewählte Tonmineralien mit hohem Montmorillonitgehalt, gegebenenfalls mit einem Anteil an Oxiden der Metalle der VI. Nebengruppe des Periodensystems, die einer speziellen Behandlung - insbesondere Säurebehandlungen, Formung, Calcinierung - unterworden werden. Das neue Verfahren soll zusätzlich noch zu einer Aktivitätserhöhung führen.

Als Katalysatorträger für die Phosphorsäure wird ein montmorillonithaltiger Ton verwendet, dem nach der ersten Säurebehandlung ein feinkörniges Silicagel mit einer Korngrößenverteilung von etwa 30 und 60 $10^{-6}$ m, einem Porenvolumen von 0,9-1,7 ml/g und einer Oberfläche von 200-500 m²/g zugefügt wird.

Herstellung von Ethnol und Isopropanol.

EP 0 283 649 A1

# Verfahren zur Herstellung eines Katalysators für die Hydratation von Olefinen zu Alkoholen

Es ist bekannt, daß sich Olefine in der Gasphase bei erhöhten Drücken mit Wasserdampf zu Alkoholen umsetzen lassen. Besondere technische Bedeutung haben solche Verfahren bei der Herstellung von Ethanol aus Ethylen und Isopropylalkohol aus Propylen erlangt. Die Synthese dieser Alkohole wird in Gegenwart von Katalysatoren durchgeführt, und zwar dient in aller Regel als Katalysator Phosphorsäure, die auf Trägern aufgebracht ist.

Bekannt sind Trägermaterialien entweder auf der Basis reiner Kieselsäure, wie z. B. Kieselgur oder Kieselgel (US-PS 2 579 601), oder auf der Basis von Kieselsäure mit mehr oder weniger großem Tonerdegehalt, wie z. B. calcinierte Diatomeenerde, deren Struktur durch Ton oder tonhaltige Stoffe zusammengehalten wird (DE-PS 27 22 616, US-PS 3 311 568).

Bei den Trägern auf Basis reiner Kieselsäure ist die Festigkeit über längere Standzeiten problematisch. Die tonerdehaltigen Materialien zeichnen sich zwar durch eine bessere mechanische Festigkeit aus, sie haben jedoch bei zu hohem Tonerdegehalt den Nachteil, daß während der Reaktion das Aluminiumoxid durch die Einwirkung der Phosphorsäure herausgelöst wird.

In DE-PS 11 56 772 wurde nun ein Verfahren beschrieben, einen tonerdehaltigen Träger für die bei der Olefinhydratation als Katalysator verwendete Phosphorsäure herzustellen, indem geformte Kontaktkörper aus mineralischen Tonerdesilikaten derart mit Mineralsäure behandelt werden, daß der Aluminiumoxidgehalt vorzugsweise auf zwischen 1 und 5 Gew.-% abgesenkt wird. Dieses Material weist im allgemeinen sowohl die erforderliche mechanische Festigkeit auf als auch einen ausreichend niedrigen Restaluminiumoxidgehalt zur Vermeidung des Herauslösens. Andererseits wurde beim Einsatz von handelsüblichen Kontaktkörpern für die Herstellung von Katalysatorträgern für die Hydratation von Olefinen beobachtet, daß ohne Vorauswahl des Rohstoffs stark unterschiedliche Katalysatoraktivitäten gefunden werden.

Schließlich war es gelungen, auch auf der Basis grobporiger Kieselgele Träger für Phosphorsäure mit hoher Hydratationsaktivität und ausreichender mechanischer Festigkeit zu entwickeln (DE-PS 26 25 705, DE-PS 27 19 055). Allerdings verbleibt als Nachteil dieser Träger auf der Basis amorpher Kieselsäure, daß bei längerem Einsatz unter Bedingungen der Hydratationsreaktion die amorphe Kieselsäure teilweise kristallisiert, was mit starker Verminderung der spezifischen Oberfläche und damit der katalytischen Aktivität, und zwar irreversibel, verbunden ist, sowie mit einer Abnahme der mechanischen Festigkeit.

Ein weiterer Nachteil aller bisher eingesetzten Hydratationskatalysatoren aus Phosphorsäure auf silikatischem Träger ist das langsame Abnehmen der Aktivität durch ausgetragene Phosphorsäure, die im kontinuierlichen Betrieb ständig mit Lauge neutralisiert werden muß, um Korrosionswirkungen des sauren Rohalkohols auf nachgeschaltete Apparate zu vermeiden.

Durch kontinuierliche Einspritzung von Phosphorsäure gemäß DE-PS 26 58 946 in einer Menge, die der ausgetragenen Phosphorsäuremenge entspricht, konnte zwar der laufende Aktivitätsverlust weitgehend vermieden und damit die Katalysatorlebensdauer beträchtlich verlängert werden; damit sind aber entsprechende Anforderungen an die Lebensdauer des Trägers zu stellen, so daß die Verwendung solcher Träger ausscheidet, bei denen unter Reaktionsbedingungen Kristallisationen unter Verminderung der katalytischen Aktivität auf irreversible Weise ablaufen und die mechanische Festigkeit im Laufe der Zeit abnimmt.

Wie DE-PS 29 08 491 zeigt, läßt sich aus Tonmineralien dann ein Träger für einen Hydratationskatalysator gleichbleibend hoher katalytischer Aktivität erhalten, wenn durch sorgfältige Auswahl des Rohstoffs Vorsorge dafür getroffen wird, daß das Material in hohem Maße aus Montmorillonit besteht, was dazu führt, daß nach Formung, Auslaugung und Tränkung die Oberfläche und das Saugvolumen groß sind.

Die so gezielt hergestellten Katalysatoren bzw. Katalysatorträger aus montmorillonithaltigem Ton zeigen gegenüber solchen, hergestellt aus geformten Kontaktkörpern auf Basis mineralischer Tonerdesilikate unterschiedlicher Provenienz, eine erhöhte Aktivität, d. h. es werden pro h und l Katalysatorschüttung etwa 105-110 g Ethanol bzw. ca. 300 g Isopropylalkohol gewonnen. Diese erhöhte Aktivität kann jedoch nur über einen längeren Zeitraum aufrechterhalten werden, wenn die ausgetragene Phosphorsäure, die bei Ethanol etwa 0,07 g pro h und l Katalysatorschüttung beträgt, bei Isopropylalkohol etwa 0,01 g pro h und l Katalysatorschüttung, durch kontinuierliche Zugabe der gleichen Säuremenge ausgeglichen wird. Diese ausgetragene Säure muß darüber hinaus noch mit Lauge neutralisiert werden. Die mechanische Festigkeit der Katalysatoren liegt in der Größenordnung von 70-90 Newton/Kugel, was für das Beschicken der üblichen Reaktoren ausreichend ist.

Eine weitere Verbesserung der Katalysatoreigenschaften wurde gemäß DE-PS 29 29 919 erzielt, hier werden als Weiterentwicklung der DE-PS 29 08 491 zusätzlich 5-15 Gew.-%,

bezogen auf die Gesamttrockensubstanz von einem Oxid oder einer Mischung mehrerer Oxide von Elementen der VI. Nebengruppe des Periodensystems bei sonst gleicher Katalysatorherstellung wie nach DE-PS 29 08 491 zugegeben. Die erhaltenen Verbesserungen waren:

Erhöhung der mechanischen Festigkeit auf 110-130 Newton Kugel, Steigerung der Katalysatoraktivität auf etwa 130 g Ethanol und etwa 350 g Isopropylalkohol pro h und l Katalysatorschüttung, Verringerung der Phosphorsäureaustragung auf etwa 0,035 g pro h und l Katalysatorschüttung bei Ethanol und etwa 0,005 g pro h und l Katalysatorschüttung bei Isopropylalkohol, also in beiden Fällen etwa Verringerung auf die Hälfte.

Nachdem somit ein Katalysator mit ausreichender Lebensdauer und Langzeitfestigkeit gefunden war und auch die Phosphorsäureaustragung auf einen befriedigenden Wert zurückgedrängt war, blieben die überwiegend aus Silicagel bestehenden Träger lediglich hinsichtlich ihrer anfäng lichen Aktivität den auf Basis von Montmorillonit hergestellten Trägern überlegen. So werden gemäß DE-PS 27 22 616 bis zu 144 g Ethanol pro h und l Katalysatorschüttung erzeugt, allerdings nur 115 g Isopropylalkohol pro h und l Katalysatorschüttung. In US-PS 3 311 568 wird nun eine wesentlich höhere Katalysatoraktivität beschrieben, nämlich 240 g Ethanol pro h und l Katalysatorschüttung, wobei alle 24 h Phosphorsäure zudosiert wird und insgesamt eine Beobachtung der Aktivität nur über 1 500 h, also etwa 2 Monate, erfolgte. Es wird berichtet, daß die Festigkeit mit höherem Anteil von Bentonit steigt, beschrieben wird die Zumischung von 3-5 % Bentonit zu der Diatomeenerde vor der Sinterung.

Überraschenderweise wurde nun gefunden, daß die guten Katalysatoreigenschaften gemäß DE-PS 29 08 491 und DE-PS 29 29 919 hinsichtlich Langzeitfestigkeit und gutem Festhalten der Phosphorsäure erhalten bleiben und gleichzeitig die Aktivität, gemessen in erzeugter Alkoholmenge pro Zeiteinheit und Katalysatorvolumen, erheblich gesteigert werden kann, wobei diese Aktivität über einen Zeitraum von 6 Monaten praktisch unverändert bleibt, wenn man dem in der ersten Stufe mit Säure behandelten hoch montmorillonithaltigen Ton vor dem Formen zum Calcinieren 20-40 Gew.-%, bezogen auf die Gesamttrockensubstanz an einem feinkörnigen Silicagel zugibt und so Oberfläche und Porenvolumen des fertigen Katalysatorträgers erhöht.

Gegenstand der Erfindung ist daher ein Verfahren zur Herstellung eines Katalysators aus Tonmineralien und Silicagel für die Hydratation von Olefinen mit 2-3 C-Atomen zu den entsprechenden Alkoholen mittels auf dem Trägermaterial aufgebrachter Phosphorsäure durch eine zweistufige Säurebehandlung dieses im wesentlichen montmorillonithaltigen Tons, der mit nicht mehr als 3 % Begleitmaterialien, wie Quarz, Feldspat und Glimmer verunreinigt ist und bis zu 0,5 % $K_2O$ enthalten kann, wobei zwischen den beiden Säurebehandlungen eine Formgebung und Calcinierung erfolgt, dadurch gekennzeichnet, daß man dem in erster Stufe bis auf 10-20 Gew.-%, vorzugsweise 13-18 Gew.-% $Al_2O_3$ säurebehandelten Ton, der eine Oberfläche von 200-400 $m^2/g$, bevorzugt 240-300 $m^2/g$ aufweist, 20-40 Gew.-%, bezogen auf die Gesamttrockensubstanz, feinkörniges Silicagel zufügt, dann bei einem Gesamtwassergehalt von 40-60 % durch Pressen formt, bei 500-900 °C calciniert und anschließend das geformte Trägermaterial in einer zweiten Stufe mit Säure behandelt, bis es einen $Al_2O_3$-Gehalt von 1-4 Gew.-%, bevorzugt 1-2 Gew.-%, und eine Oberfläche von 180-250 $m^2/g$, bevorzugt 200-220 $m^2/g$ sowie ein Porenvolumen zwischen 0,8 und 1,5 ml/g, bevorzugt von 0,9-1 ml/g, aufweist und den so erhaltenen Träger in bekannter Weise mit Phosphorsäure tränkt, wobei das zuzumischende feinkörnige Silicagel im wesentlichen eine Korngrößenverteilung zwischen 30 und 60 $\bullet$ $10^{-6}$ m, ein Porenvolumen von 0,9-1,7 ml/g, vorzugsweise von 1-1,2 ml/g und eine Oberfläche von 200-500 $m^2/g$, bevorzugt 380-400 $m^2/g$, besitzt.

Die Porendurchmesser des fertigen Trägers vor der Tränkung mit Phosphorsäure liegen zwischen 1 und 20 $\bullet$ $10^{-9}$ m, das Maximum der Häufigkeitsverteilung um 5 $\bullet$ $10^{-9}$ m.

Es können auch andere Minerale der Montmorillonitgruppe, die kein Kalium, aber das Montmorillonit-Kristallgitter enthalten, eingesetzt werden.

Eine weitere Variante, insbesondere zur Erhöhung der Festigkeit und Verringerung des Austragens von Phosphorsäure besteht in dem Zugeben von 5-15 Gew.-%, bezogen auf die Gesamttrockensubstanz an einem oder mehreren Oxiden von Metallen der VI. Nebengruppe des Periodensystems.

Es wurde ferner gefunden, daß man die Festigkeit des Trägermaterials auch ohne Zusatz von 5-15 Gew.-% eines oder mehrerer Oxide von Metallen der VI. Nebengruppe entscheidend erhöhen kann, indem man das geformte Material aus montmorillonithaltigem Ton und 20-40 % Silicagel nach der zweiten Säurebehandlung und nach der Trocknung bei einem bevorzugten $Al_2O_3$-Gehalt von 1-2 Gew.-% nochmal 5-10 h bei ca. 800 °C nachcalciniert, wobei die physikalischen Daten wie Oberfläche (200-220 $m^2/g$) und Porenvolumen (0,9-1 ml/g) erhalten bleiben. Danach wird der verfestigte Träger in bekannter Weise mit Phosphorsäure getränkt.

Eine weitere Verbesserung der Festigkeit ist zu erreichen, wenn man den mit Phosphorsäure getränkten Katalysator 5-10 h auf 800-1 000 °C erhitzt. Dabei werden Kugeldruckfestigkeiten zwischen 80-100 Newton erreicht.

Beispiel 1

Ein gemahlener natürlicher Rohton, der aufgrund einer Laboruntersuchung so ausgewählt wurde, daß bei einer einstündigen Behandlung mit 20 %iger Salzsäure bei 82 °C nicht mehr als 5 g $K_2O$ pro kg eingesetzte Trockensubstanz extrahiert werden, wurde eine Stunde lang mit 20 %iger Salzsäure auf 82 °C erhitzt, wobei die Säuremenge so bemessen wurde, daß auf 1 kg Ton 8,4 Mol HCl kamen, säurefrei gewaschen und getrocknet. Dabei wurde ein Material mit einem Restaluminiumoxidgehalt von 16 Gew.-% und einer spezifischen Oberfläche von 300 m² g erhalten.

Zu 70 Teilen dieses getrockneten Materials wurden 30 Teile feinkörniges Silicagel mit einer Korngrößenverteilung hauptsächlich zwischen 30 und 60 • $10^{-5}$ m, einem Porenvolumen von 1,1 ml/g und einer Oberfläche von 410 m² g gegeben und nach dem Anteigen bis zu einem Gesamtwassergehalt von 50 % zu Kugeln von 5 mm Durchmesser gepreßt. Die Verfestigung erfolgte durch 5 h langes Erhitzen auf 800 °C.

Die so erhaltenen Kontaktkugeln wurden zweimal für je eine Stunde mit 20 %iger Salzsäure bei 100-110 °C behandelt und mit Wasser säurefrei gewaschen. Nach dem Trocknen bei etwa 110-120 °C wurde in den Kugeln ein Aluminiumoxidgehalt von 1,5 Gew.-% gefunden, die spezifische Oberfläche betrug 210 m²/g, das Porenvolumen 0,95 ml/g.

Die Kugeln wurden sodann mit 60 Gew.-%iger Phosphorsäure überflutet, die zwei Stunden einwirkte, danach wurde erneut bei etwa 110-120 °C getrocknet. Die so behandelten Kugeln hatten einen $H_3PO_4$-Gehalt von 44,8 Gew.-%. Die mittlere Druckfestigkeit betrug 70 Newton/Kugel.

Beim Einsatz dieses so fertiggestellten Hydratationskatalysators zur Synthese von Ethanol aus Ethylen und Wasser in der Gasphase bei einer Temperatur von 235 °C und einem Druck von 70 bar konnte eine Katalysatorausbeute von 160 g Ethanol pro h und I Katalysatorschüttung erhalten werden. Dieser Wert war nach sechsmonatiger Laufzeit der Anlage praktisch noch unverändert. Die Austragung an Phosphorsäure unter Reaktionsbedingungen betrug 0,07 g pro h und I Katalysatorschüttung.

Beispiel 2

Ein gemahlener natürlicher Rohton, der aufgrund einer Laboruntersuchung so ausgewählt wurde, daß bei einer einstündigen Behandlung mit 20 %iger Salzsäure bei 82 °C nicht mehr als 5 g $K_2O$ pro kg eingesetzte Trockensubstanz extrahiert werden, wurde eine Stunde lang mit 20 %iger Salzsäure auf 82 °C erhitzt, wobei die Säuremenge so bemessen wurde, daß auf 1 kg Ton 8,4 Mol HCl kamen, säurefrei gewaschen und getrocknet. Dabei wurde ein Material mit einem Restaluminiumoxidgehalt von 16 Gew.-% und einer spezifischen Oberfläche von 300 m² g erhalten.

Zu 70 Teilen dieses getrockneten Materials wurden 30 Teile feinkörniges Silicagel mit einer Korngrößenverteilung hauptsächlich zwischen 30 und 60 • $10^{-5}$ m, einem Porenvolumen von 1,1 ml/g und einer Oberfläche von 410 m²/g gegeben und nach dem Anteigen bis zu einem Gesamtwassergehalt von 50 % zu Kugeln von 5 mm Durchmesser gepreßt. Die Verfestigung erfolgte durch 5 h langes Erhitzen auf 800 °C.

Die so erhaltenen Kontaktkugeln wurden zweimal für je eine Stunde mit 20 %iger Salzsäure bei 100-110 °C behandelt und mit Wasser säurefrei gewaschen. Nach dem Trocknen bei etwa 110-120 °C wurde der geformte Träger nochmal 10 h bei 800 °C zwecks Verfestigung calciniert. Danach wurde bei den Kugeln ein Aluminiumoxidgehalt von 1,3 Gew.-% ermittelt, die spezifische Oberfläche betrug 195 m²/g und das Porenvolumen 0,96 ml/g.

Die Kugeln wurden sodann mit 60 Gew.-%iger Phosphorsäure getränkt und nach zweistündiger Einwirkzeit bei etwa 110-120 °C getrocknet. Der $H_3PO_4$-Gehalt der so behandelten Kugeln betrug 45,1 Gew.-%; die mittlere Druckfestigkeit lag bei 80 Newton/Kugel.

Beim Einsatz dieses so fertiggestellten Hydratationskatalysators zur Synthese von Ethanol aus Ethylen und Wasser in der Gasphase bei einer Temperatur von 235 °C und einem Druck von 70 bar konnte eine Katalysatorausbeute von 160 g Ethanol pro h und I Katalysatorschüttung erhalten werden. Dieser Wert war nach sechsmonatiger Laufzeit der Anlage praktisch noch unverändert. Die Austragung an Phosphorsäure unter Reaktionsbedingungen belief sich auf 0,07 g pro h und I Katalysatorschüttung.

Beispiel 3

Ein gemahlener natürlicher Rohton, der aufgrund einer Laboruntersuchung so ausgewählt wurde, daß bei einer einstündigen Behandlung mit 20 %iger Salzsäure bei 82 °C nicht mehr als 5 g $K_2O$ pro kg eingesetzte Trockensubstanz extrahiert werden, wurde eine Stunde lang mit 20 %iger Salzsäure auf 82 °C erhitzt, wobei die Säuremenge so bemessen wurde, daß auf 1 kg Ton 8,4 Mol HCl kamen, säurefrei gewaschen und getrocknet. Dabei wurde ein Material mit einem Restaluminiumoxidgehalt von 16 Gew.-% und einer spezifischen Oberfläche von 300 m²/g erhalten.

Zu 70 Teilen dieses getrockneten Materials wurden 30 Teile feinkörniges Silicagel mit einer Korngrößenverteilung hauptsächlich zwischen 30 und 60 • 10⁻⁶ m, einem Porenvolumen von 1,1 ml/g und einer Oberfläche von 410 m²/g gegeben und nach dem Anteigen bis zu einem Gesamtwassergehalt von 50 % zu Kugeln von 5 mm Durchmesser gepreßt. Die Verfestigung erfolgte durch 5 h langes Erhitzen auf 800 °C.

Die so erhaltenen Kontaktkugeln wurden zweimal für je eine Stunde mit 20 %iger Salzsäure bei 100-110 °C behandelt und mit Wasser säurefrei gewaschen. Nach dem Trocknen bei etwa 100-110 °C wurde in den Kugeln ein Aluminiumoxidgehalt von 1,4 Gew.-% gefunden, die spezifische Oberfläche betrug 200 m²/g und das Porenvolumen 0,95 ml/g. Die Kugeln wurden sodann mit 50 Gew.-%iger Phosphorsäure getränkt und nach zweistündiger Einwirkzeit bei etwa 110-120 °C getrocknet. Der Phosphorsäuregehalt der so behandelten Kugeln betrug 38,8 Gew.-%. Zwecks weiterer Verfestigung wurde der mit Phosphorsäure getränkte Katalysator 10 h auf 900 °C erhitzt. Dieser nachcalcinierte Träger besaß im Durchschnitt eine Druckfestigkeit von 90 Newton/Kugel.

Beim Einsatz dieses so hergestellten Hydratationskatalysators zur Synthese von Ethanol aus Ethylen und Wasser in der Gasphase bei einer Temperatur von 235 °C und einem Druck von 70 bar konnte ebenfalls eine Katalysatorausbeute von 160 g Ethanol pro h und l Katalysatorschüttung erhalten werden. Dieser Wert war nach sechsmonatiger Laufzeit der Anlage praktisch noch unverändert. Die Austragung an Phosphorsäure war unter Reaktionsbedingungen auf die Hälfte zurückgegangen und betrug 0,035 g pro h und l Katalysatorschüttung.

## Beispiel 4

Ein gemahlener natürlicher Rohton, der aufgrund einer Laboruntersuchung so ausgewählt wurde, daß bei einer einstündigen Behandlung mit 20 %iger Salzsäure bei 82 °C nicht mehr als 5 g $K_2O$ pro kg eingesetzte Trockensubstanz extrahiert werden, wurde eine Stunde lang mit 20 %iger Salzsäure auf 82 °C erhitzt, wobei die Säuremenge so bemessen wurde, daß auf 1 kg Ton 8,4 Mol HCl kamen, säurefrei gewaschen und getrocknet. Dabei wurde ein Material mit einem Restaluminiumoxidgehalt von 16 Gew.-% und einer spezifischen Oberfläche von 300 m²/g erhalten.

Zu 70 Teilen dieses getrockneten Materials wurden 30 Teile feinkörniges Silicagel mit einer Korngrößenverteilung hauptsächlich zwischen 30 und 60 • 10⁻⁶ m, einem Porenvolumen von 1,1 ml/g und einer Oberfläche von 410 m²/g gegeben und danach zu diesen 100 Teilen noch 8 Teile Chromoxid ($CrO_3$), so daß die Mischung 7,4 % Chromoxid enthielt. Nach Anteigen mit 50 % Wasser auf die Gesamtmenge bezogen wurde zu Kugeln von 5 mm Durchmesser gepreßt. Die Verfestigung erfolgte durch 5 h langes Erhitzen auf 800 °C.

Die so erhaltenen Kontaktkugeln wurden zweimal für je eine Stunde mit 20 %iger Salzsäure bei 100-110 °C behandelt und mit Wasser säurefrei gewaschen. Nach dem Trocknen bei etwa 110-120 °C wurde in den Kugeln ein Aluminiumoxidgehalt von 1,4 Gew.-% gefunden, die spezifische Oberfläche betrug 200 m²/g, das Porenvolumen 0,94 ml/g.

Die Kugeln wurden sodann mit 60 Gew.-%iger Phosphorsäure überflutet, die zwei Stunden einwirkte, danach wurde erneut bei etwa 110-120 °C getrocknet. Die so behandelten Kugeln hatten einen $H_3PO_4$-Gehalt von 44,5 Gew.-%. Die mittlere Druckfestigkeit betrug 80 Newton/Kugel.

Beim Einsatz dieses so fertiggestellten Hydratationskatalysators zur Synthese von Ethanol aus Ethylen und Wasser in der Gasphase bei einer Temperatur von 240 °C und einem Druck von 70 bar konnte eine Katalysatorausbeute von 180 g Ethanol pro h und l Katalysatorschüttung erhalten werden. Dieser Wert war nach sechsmonatiger Laufzeit der Anlage praktisch noch unverändert. Die Austragung an Phosphorsäure unter Reaktionsbedingungen betrug 0,035 g pro h und l Katalysatorschüttung.

## Beispiel 5

Ein gemahlener und natürlicher Rohton, der aufgrund einer Laboruntersuchung so ausgewählt wurde, daß bei einer einstündigen Behandlung mit 20 %iger Salzsäure bei 82 °C nicht mehr als 5 g $K_2O$ pro kg eingesetzte Trockensubstanz extrahiert werden, wurde eine Stunde lang mit 20 %iger Salzsäure auf 82 °C erhitzt, wobei die Säuremenge so bemessen wurde, daß auf 1 kg Ton 8,4 Mol HCl kamen, säurefrei gewaschen und getrocknet. Dabei wurde ein Material mit einem Restaluminiumoxidgehalt von 16 Gew.-% und einer spezifischen Oberfläche von 300 m²/g erhalten.

Zu 70 Teilen dieses getrockneten Materials wurden 30 Teile feinkörniges Silicagel mit einer Korngrößenverteilung hauptsächlich zwischen 30 und 60 • 10⁻⁶ m, einem Porenvolumen von 1.1 ml/g und einer Oberfläche von 410 m²/g gegeben und danach zu diesen 100 Teilen noch 3 Teile Chromoxid ($CrO_3$), 3 Teile Molybdänoxid ($MoO_3$) und 5 Teile Wolframoxid ($WO_3$), so daß die Mischung insgesamt 10 % an Oxiden von Elementen der VI. Nebengruppe des Periodensystems enthielt. Nach Anteilen mit 50 % Wasser auf die Gesamtmenge bezogen wurde zu Kugeln von 5 mm Durchmesser gepreßt. Die Verfestigung erfolgte durch 5 h langes Erhitzen auf 800 °C.

Die so erhaltenen Kontaktkugeln wurden zweimal für je eine Stunde mit 20 %iger Salzsäure bei 100-110 °C behandelt und mit Wasser säurefrei gewaschen. Nach dem Trocknen bei etwa 110-120 °C wurde in den Kugeln ein Aluminiumoxidgehalt von 1,4 Gew.-% gefunden, die spezifische Oberfläche betrug 200 m²/g, das Porenvolumen 0,94 ml/g.

Die Kugeln wurden sodann mit 40 Gew.-%iger Phosphorsäure überflutet, die zwei Stunden einwirkte, danach wurde erneut bei etwa 110-120 °C getrocknet. Die so behandelten Kugeln hatten einen $H_3PO_4$-Gehalt von 32 Gew.-%. Die mittlere Druckfestigkeit betrug 80 Newton/Kugel.

Beim Einsatz dieses so fertiggestellten Hydratationskatalysators zur Synthese von Isopropylalkohol aus Propylen und Wasser in der Gasphase bei einer Temperatur von 186 °C und einem Druck von 38 bar konnte eine Katalysatorausbeute von 360 g Isopropylalkohol pro h und l Katalysatorschüttung erhalten werden. Dieser Wert hatte sich nach sechsmonatiger Laufzeit der Anlage nicht verändert. Die Austragung an Phosphorsäure unter Reaktionsbedingungen betrug 0,005 g pro h und l Katalysatorschüttung.

## Ansprüche

1. Verfahren zur Herstellung eines Katalysators aus Tonmineralien und Silicagel für die Hydratation von Olefinen mit 2-3 C-Atomen zu den entsprechenden Alkoholen mittels auf dem Trägermaterial aufgebrachter Phosphorsäure durch eine zweistufige Säurebehandlung dieses im wesentlichen montmorillonithaltigen Tons, der mit nicht mehr als 3 % Begleitmaterialien, wie Quarz, Feldspat und Glimmer verunreinigt ist und bis zu 0,5 % $K_2O$ enthalten kann, wobei zwischen den beiden Säurebehandlungen eine Formgebung und Calcinierung erfolgt, dadurch gekennzeichnet, daß man dem in erster Stufe bis auf 10-20 Gew.-%, vorzugsweise 13-18 Gew.-% $Al_2O_3$ säurebehandelten Ton, der eine Oberfläche von 200-400 m²/g, bevorzugt 240-300 m²/g aufweist, 20-40 Gew.-%, bezogen auf die Gesamttrockensubstanz, feinkörniges Silicagel zufügt, dann bei einem Gesamtwassergehalt von 40-60 % durch Pressen formt, bei 500-900 °C calciniert und anschließend das geformte Trägermaterial in einer zweiten Stufe mit Säure behandelt, bis es einen $Al_2O_3$-Gehalt von 1-4 Gew.-%, bevorzugt 1-2 Gew.-%, und eine Oberfläche von 180-250 m²/g, bevorzugt 200-220 m²/g, sowie ein Porenvolumen zwischen 0,8 und 1,5 ml/g, bevorzugt von 0,9-1 ml/g, aufweist und den so erhaltenen Träger in bekannter Weise mit Phosphorsäure tränkt, wobei das zuzumischende feinkörnige Silicagel im wesentlichen eine Korngrößenverteilung zwischen 30 und 60 • 10⁻⁶ m, ein Porenvolumen von 0,9-1,7 ml/g, vorzugsweise von 1-1,2 ml/g, und eine Oberfläche von 200-500 m²/g, bevorzugt 380-400 m²/g, besitzt.

2. Verfahren nach Anspruch 1,
dadurch gekennzeichnet,
daß auch andere Minerale der Montmorillonitgruppe, die kein Kalium, aber das Montmorillonit-Kristallgitter enthalten, eingesetzt werden.

3. Verfahren nach den Ansprüchen 1 und 2,
dadurch gekennzeichnet,
daß zusätzlich nach Zugabe des feinkörnigen Silicagels und vor der Formgebung durch Pressen noch 5-15 Gew.-%, bezogen auf die Gesamttrockensubstanz aus mit Säure behandeltem Ton und feinkörnigem Silicagel, an einem oder mehreren Oxiden von Metallen der VI. Nebengruppe des Periodensystems zugegeben werden.

4. Verfahren nach Anspruch 1,
dadurch gekennzeichnet,
daß man das unter Silicagelzusatz geformte Trägermaterial nach der zweiten Säurebehandlung bei ca. 800 °C 5-10 h nachcalciniert.

5. Verfahren nach Anspruch 1 und 4,
dadurch gekennzeichnet,
daß man den mit Phosphorsäure getränkten Träger 5-10 h zwischen 800-1 000 °C calciniert.

Europäisches Patentamt

# EUROPÄISCHER RECHERCHENBERICHT

Nummer der Anmeldung

EP 88 10 0719

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 023 071 (CHEMISCHE WERKE HÜLS)<br>* Ansprüche 1-4 *<br>--- | 1,2 | B 01 J 27/16<br>B 01 J 21/16<br>C 07 C 29/04 |
| Y | EP-A-0 037 220 (UNION CARBIDE)<br>* Anspruch 1 *<br>--- | 1,2 | |
| A | DE-A-2 015 536 (NATIONAL DISTILLERS)<br>--- | | |
| A | US-A-3 311 568 (M.J. KLIMENKO)<br>----- | | |

RECHERCHIERTE SACHGEBIETE (Int. Cl.4)

B 01 J
C 07 C

Der vorliegende Recherchenbericht wurde für alle Patentansprüche erstellt

| Recherchenort | Abschlußdatum der Recherche | Prüfer |
|---|---|---|
| DEN HAAG | 20-05-1988 | THION M.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)